# EUROPÄISCHE PATENTSCHRIFT

(11) **EP 2 597 010 B1**
(45) Veröffentlichungstag und Bekanntmachung des Hinweises auf die Patenterteilung: **18.04.2018**
(21) Anmeldenummer: 12193385.7
(22) Anmeldetag: 20.11.2012
(51) Int. Cl.: B62B 3/14

(54) **Transportwagen**
transport trolley
chariot de transport

(30) Priorität: 24.11.2011 DE 102011055675
(43) Veröffentlichungstag der Anmeldung: 29.05.2013
(73) Patentinhaber: Wanzl Metallwarenfabrik GmbH, 89340 Leipheim (DE)
(72) Erfinder: Bannert, Jürgen, 89340 Leipheim (DE); Pech, Marco, 89312 Günzburg (DE)

(56) Entgegenhaltungen:
- DE-A1- 4 023 862
- DE-A1-102007 033 623
- DE-U1-202009 017 023

## Beschreibung

Die Erfindung betrifft einen stapelbaren Transportwagen mit den Merkmalen im Oberbegriff des Hauptanspruchs, wie in der DE 20 2009 017 023 U1 gezeigt. Stapelbare Transportwagen sind aus dem Stand der Technik bekannt. In SB-Geschäften werden sie zum Transport von Waren eingesetzt. Ein solcher Wagen weist ein Fahrgestell auf, an dem Rollen angeordnet sind und das einen Korb trägt, wobei an dem Korb ein Schiebegriff angeordnet ist. Im hinteren unteren Bereich des Wagens ist eine zusätzliche Warenablage angeordnet, die von einer Nichtgebrauchslage in eine Gebrauchslage bewegbar ist und z.B. mit einer Getränkekiste oder so Sechs-Pack-Gebinden beladen werden kann.

Transportwagen mit einer solchen Warenablage sind beispielsweise in den Patentschriften EP 0 734 933 B1, DE 103 32 868 B4 sowie der EP 0 798 193 B1 veröffentlicht.

Jede Warenablage ist mit einem Schwenkbügel am Untergestell eines Transportwagens angeordnet. Hierfür sind am Untergestell zwei Aufnahmen vorgesehen. Jede Aufnahme ist ein zusätzliches Bauteil, das am Untergestell ortsfest angebracht ist und eine Bohrung aufweist. Herkömmlicherweise ist an jedem Ende des Schwenkbügels eine Schraube angeschweißt. Diese ortsfeste Anordnung der Schraube an dem Schwenkbügel erfolgt in einem Winkel von ca. 90° zu dem Ende des Schwenkbügels. Die Schraube wird dann in die Bohrung der Aufnahme eingebracht, um den Schwenkbügel unter Verwendung einer Distanzscheibe wechselbar am Untergestell anzuordnen.

Die Aufgabe der vorliegenden Erfindung besteht darin, einen stapelbaren Transportwagen mit einer verbesserten Warenablage zu beschreiben.
Die Erfindung löst die Aufgabe mit den Merkmalen im Hauptanspruch.

Weitere vorteilhafte Ausführungen sind in den Unteransprüchen beschrieben.

Durch die Einteiligkeit des Schwenkbügels kann eine vereinfachte Anordnung am Untergestell des Wagens erfolgen. Ferner ist eine kostengünstige Herstellung durch das Biegen des Drahtes auf einer CNC-Biegemaschine möglich. Zusätzliche Teile müssen nicht mehr wie bisher angebracht werden.

Ferner kann durch die Verwendung von Fixierhilfen eine dauerhaft stabile Anordnung des Schwenkbügels am Wagen sichergestellt werden. Die Fixierhilfen stellen darüber hinaus kostengünstige Bauteile zur Sicherung der Warenablage am Untergestell dar.

Auch ist ein einfacher Wechsel der Warenablage oder der Fixierhilfen möglich.

Die Erfindung wird anhand eines Ausführungsbeispiels näher erläutert. Es zeigt
- Fig. 1: einen Teil eines Transportwagens in 3-D-Ansicht mit einem Schwenkbügel einer Warenablage und einer Fixierungshilfe,
- Fig. 2a: einen Schwenkbügel in Draufsicht,
- Fig. 2b: den Schwenkbügel in Seitenansicht,
- Fig. 2c: den Schwenkbügel in perspektivischer Ansicht,
- Fig. 2d: das Ende des Schwenkbügels in Seitenansicht,
- Fig. 3a, c: eine Fixierungshilfe in perspektivischer Ansicht,
- Fig. 3b: dieselbe Fixierungshilfe in perspektivischer Ansicht von unten,
- Fig. 3d: dieselbe Fixierungshilfe in Draufsicht,
- Fig. 3e, f: dieselbe Fixierungshilfe in Seitenansicht sowie
- Fig. 3g: dieselbe Fixierungshilfe in Schnittdarstellung A-A.

Die Erfindung betrifft einen stapelbaren Transportwagen 1 mit einem Fahrgestell 2. Am Fahrgestell 2 sind Rollen 4 angeordnet. Ferner trägt das Fahrgestell 2 einen Korb, an dem ein Schiebegriff angeordnet ist. Darüber hinaus ist das Fahrgestell 2 mit einer Warenablage 5 ausgestattet, die von einer Nichtgebrauchslage in eine Gebrauchslage bewegbar ist. Die Warenablage 5 weist hierfür einen Schwenkbügel 6 auf. Ferner ist am Fahrgestell 2 eine Aufnahme 3 für den Schwenkbügel 6 vorgesehen.

Die Warenablage 5 ist, wie es aus dem Stand der Technik bereits bekannt ist, im hinteren Bereich des Wagens angeordnet.

Die Enden 7 des Schwenkbügels 6 sind gekröpft, d.h. in einem Winkel von 90° zum Schwenkbügel 6 ausgeführt. Die Enden 7 des Schwenkbügels 6 sind mit einem Gewinde 8 versehen. Ferner ist der Schwenkbügel 6 mit einem Sicherungsmittel 9 ausgestattet, das die Enden 7 des Schwenkbügels 6 an der Aufnahme 3 sichert.

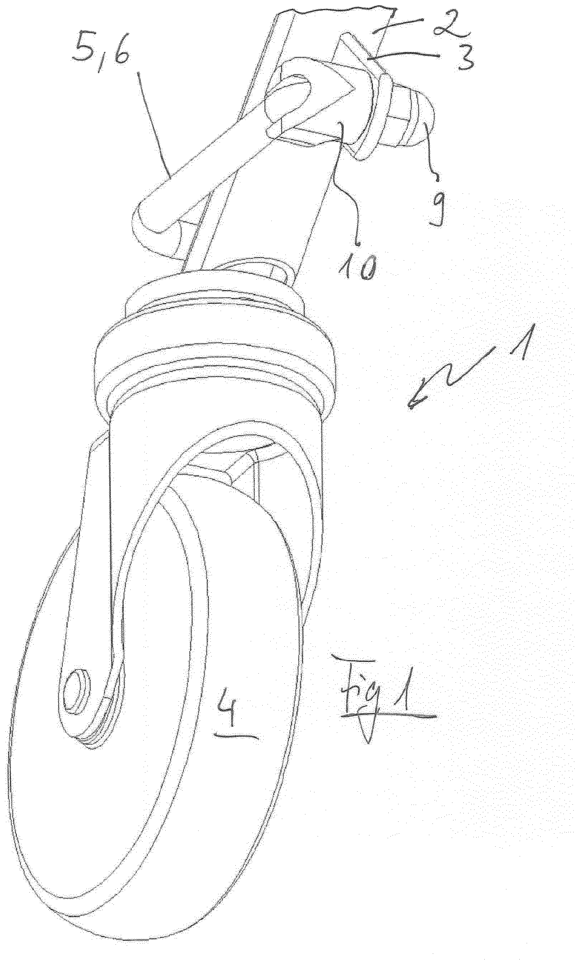

Zusätzlich ist eine Fixierungshilfe 10 am Schwenkbügel 6 vorgesehen. Diese ist vorzugsweise aus einem Kunststoff gefertigt. Figur 1 zeigt einen Teil eines Transportwagens 1 in 3-D-Ansicht mit einem Schwenkbügel 6 einer Warenablage 5 und einer Fixierungshilfe 10. Insbesondere ist die Fixierungshilfe 10 in dem gekröpften Bereich 7 des Schwenkbügels 6 angeordnet. Das Sicherungsmittel 9 kann, wie in Figur 1 dargestellt, eine Mutter sein.

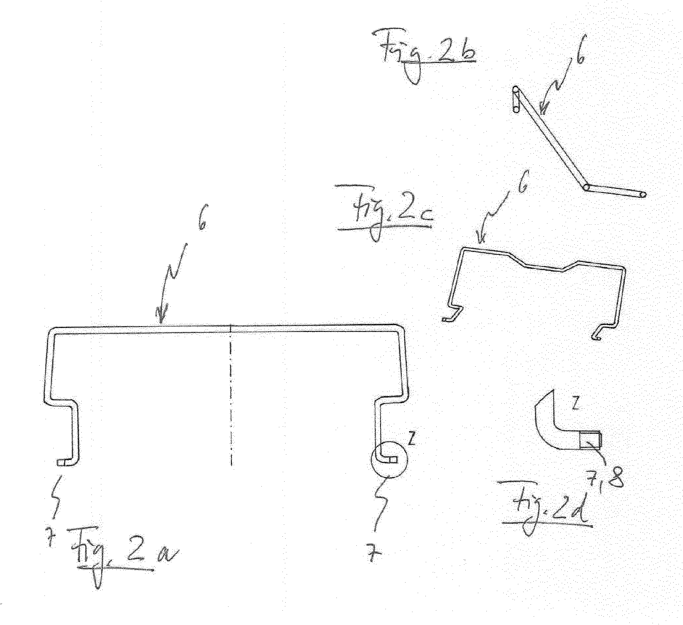

In den Figuren 2a bis 2c ist der Schwenkbügel 6 dargestellt. Dieser ist an seinen Enden 7 gekröpft ausgeführt. Ferner ist das Ende 7 mit einem Gewinde 8 versehen. Durch diese Einteiligkeit können die Herstellungskosten des Schwenkbügels 6 erheblich dezimiert werden.

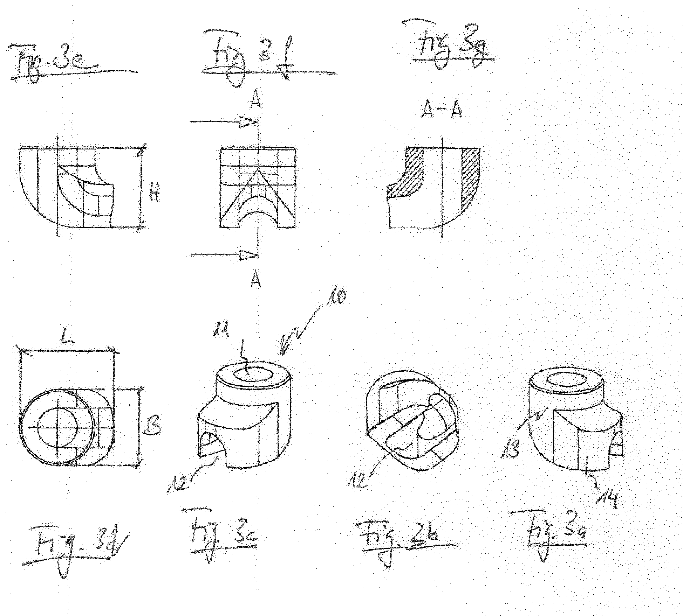

Zur einfachen Anordnung des Schwenkbügels 6 in die Aufnahmen 3, die am Untergestell 2 der Transportwagens 1 angeordnet sind, wird jeweils auf das Ende 7 des Schwenkbügels 6 eine Fixierungshilfe 10 gesteckt. Diese weist hierfür eine Bohrung 11 auf. Eine Fixierungshilfe 10 ist in den Figuren 3a bis 3g dargestellt.

Darüber hinaus ist zur sicheren Anordnung der Fixierungshilfe 10 am Schwenkbügel 6 ein Lagerbereich 12 vorgesehen, so dass ein Teil des Schwenkbügels 6 von der Fixierungshilfe 10 aufgenommen wird.

Der Durchmesser der Bohrung 11 ist abhängig von dem Durchmesser des Drahtes. Vorzugsweise wird ein Draht von 10 mm für den Schwenkbügel 6 verwendet. Eine Bohrung 11 von ca. 10,4 mm hat sich als sinnvoll erwiesen. Die Höhe H der Fixierungshilfe 10 ist abhängig von der Stärke des verwendeten Drahtes. Vorzugsweise wird eine Höhe H von ca. 21 mm verwendet. Eine Breite B von ca. 20 mm hat sich als sinnvoll erwiesen, somit weist der zylindrische Teil auch einen Außendurchmesser von ca. 20 mm auf. Die Länge L beträgt vorzugsweise ca. 25 mm. Die Fixierungshilfe 10 ist, wie die Darstellung 3f zeigt, symmetrisch ausgeführt.

Der zylindrische Teil 13 führt in einen abgestuften Teil 14, der insbesondere auf seiner Unterseite die Ausnehmung aufweist, die als Lagerbereich 12 dient. Dies ist insbesondere in den Figuren 3a, 3b und 3c dargestellt. Die Herstellung der Fixierungshilfe 10 erfolgt vorzugweise mittels eines Spritzgussverfahrens. Als Material hat sich Kunststoff als vorteilhaft erwiesen.

### Bezugszeichenliste

- 1: Transportwagen, Wagen
- 2: Fahrgestell, Untergestell
- 3: Aufnahme für einen Schwenkbügel
- 4: Rolle
- 5: Warenablage
- 6: Schwenkbügel
- 7: gekröpfter Bereich, Ende des Schwenkbügels
- 8: Gewinde
- 9: Sicherungsmittel
- 10: Fixierungshilfe
- 11: Bohrung
- 12: Lagerbereich
- 13: zylindrischer Teil
- 14: abgestufter Teil

## Patentansprüche

1. Stapelbarer Transportwagen mit einem Fahrgestell (2), das mit Rollen (4) ausgestattet ist und einen Korb trägt, wobei an dem Korb ein Schiebegriff angeordnet ist und ferner das Fahrgestell (2) mit einer Warenablage (5) ausgestattet ist, die von einer Nichtgebrauchslage in eine Gebrauchslage bewegbar ist, wobei die Warenablage (5) hierfür einen Schwenkbügel (6) aufweist und am Fahrgestell (2) eine Aufnahme (3) für den Schwenkbügel (6) vorgesehen ist, wobei die Enden (7) des Schwenkbügels (6) gekröpft ausgeführt sind, die Enden (7) des Schwenkbügels (6) mit einem Gewinde (8) versehen sind, und der Schwenkbügel (6) mit einem Sicherungsmittel (9) an der Aufnahme (3) gesichert ist, **dadurch gekennzeichnet, dass** eine Fixierungshilfe (10) am Schwenkbügel (6) vorgesehen ist, die in dem gekröpften Bereich (7) des Schwenkbügels (6) angeordnet ist.

2. Stapelbarer Transportwagen nach Anspruch 1, **dadurch gekennzeichnet, dass** die Fixierungshilfe (10) aus einem Kunststoff gefertigt ist.

3. Stapelbarer Transportwagen nach einem der vorhergehenden Ansprüche, **dadurch gekennzeichnet, dass** die Fixierungshilfe (10) eine Bohrung (11) aufweist.

4. Stapelbarer Transportwagen nach einem der vorhergehenden Ansprüche, **dadurch gekennzeichnet, dass** die Fixierungshilfe (10) einen Lagerbereich (12) für den Schwenkbügel (6) vorsieht.

5. Stapelbarer Transportwagen nach Anspruch 1, **dadurch gekennzeichnet, dass** das Sicherungsmittel (9) eine Mutter ist.

## Claims

1. A nestable trolley having a wheel frame (2) which is equipped with casters (4) and which bears a basket, wherein a pushing handle is arranged on the basket and furthermore the wheel frame (2) is equipped with a goods rack (5) movable from an out-of-use position into an in-use position, wherein the goods rack (5) has a pivoting curved-piece (6) for this purpose and a receiver (3) for the pivoting curved-piece (6) is provided on the wheel frame (2), wherein the ends (7) of the pivoting curved-piece (6) are offset, the ends (7) of the pivoting curved-piece (6) are provided with a thread (8), and the pivoting curved-piece (6) is secured to the receiver (3) with a securing means (9), **characterised in that** a fixing aid (10) is provided at the pivoting curved-piece (6), which fixing aid (10) is arranged in the offset region (7) of the pivoting curved-piece (6).

2. A nestable trolley according to claim 1, **characterised in that** the fixing aid (10) is manufactured from a plastics material.

3. A nestable trolley according to any one of the preceding claims, **characterised in that** the fixing aid (10) has a bore (11).

4. A nestable trolley according to any one of the preceding claims, **characterised in that** the fixing aid (10) provides a bearing region (12) for the pivoting curved-piece (6).

5. A nestable trolley according to claim 1, **characterised in that** the securing means (9) is a nut.

## Revendications

1. Chariot de transport imbricable, muni d'un châssis de roulement (2) équipé de roulettes (4) et portant un panier, une poignée de poussée étant disposée sur ledit panier et ledit châssis de roulement (2) étant équipé, en outre, d'un reposoir (5) à marchandises qui peut être mû d'une position de non-utilisation à une position d'utilisation, ledit reposoir (5) à marchandises étant doté, à cet effet, d'un étrier pivotant (6) et un logement (3), dédié audit étrier pivotant (6), étant prévu sur ledit châssis de roulement (2), sachant que les extrémités (7) dudit étrier pivotant (6) sont de réalisation coudée, que lesdites extrémités (7) de l'étrier pivotant (6) sont pourvues d'un filetage (8), et que ledit étrier pivotant (6) est retenu au niveau du logement (3) par un moyen d'arrêt (9), **caractérisé par le fait qu'**il est prévu, sur l'étrier pivotant (6), un auxiliaire (10) de blocage à demeure situé dans la région coudée (7) dudit étrier pivotant (6).

2. Chariot de transport imbricable selon la revendication 1, **caractérisé par le fait que** l'auxiliaire (10) de blocage à demeure est fabriqué en une matière plastique.

3. Chariot de transport imbricable selon l'une des revendications précédentes, **caractérisé par le fait que** l'auxiliaire (10) de blocage à demeure comporte un perçage (11).

4. Chariot de transport imbricable selon l'une des revendications précédentes, **caractérisé par le fait que** l'auxiliaire (10) de blocage à demeure prévoit une zone de montage ou de positionnement (12) dévolue à l'étrier pivotant (6).

5. Chariot de transport imbricable selon la revendication 1, **caractérisé par le fait que** le moyen d'arrêt (9) est un écrou.
